# EUROPÄISCHE PATENTANMELDUNG

(11) **EP 3 306 041 A1**
(43) Veröffentlichungstag der Anmeldung: **11.04.2018**
(21) Anmeldenummer: 17187954.7
(22) Anmeldetag: 25.08.2017
(51) Int. Cl.: F01D 21/00

(54) **VERFAHREN ZUR ZERSTÖRUNGSFREIEN MATERIALPRÜFUNG**

(30) Priorität: 04.10.2016 DE 102016219171
(71) Anmelder: Siemens Aktiengesellschaft, 80333 München (DE)
(72) Erfinder: Clossen-von Lanken Schulz, Michael, 47661 Issum (DE); Obermayr, Stefan, 47199 Duisburg (DE); Schrey, Albert, 47647 Kerken (DE)

(57) **Zusammenfassung**

Die Erfindung betrifft ein Verfahren zur zerstörungsfreien Materialprüfung eines eine Aufnahmenut (2) für den Schaufelfuß einer Schaufel einer Axialströmungsmaschine definierenden Bauteils, bei dem es sich insbesondere um eine Welle einer Turbine oder eines Verdichters oder eine an der Welle vorgesehene Radscheibe (1) handelt, sowie eines Schaufelfußes einer Schaufel, wobei im montierten Zustand der Prüfkopf (6) eines Prüfgerätes zur zerstörungsfreien Materialprüfung in einem zwischen dem die Aufnahmenut (2) definierenden Bauteil (1) und dem Schaufelfuß im Bereich der Aufnahmenut (2) gebildeten Zwischenraum angeordnet und insbesondere in dem Zwischenraum verfahren wird, und das die Aufnahmenut (2) definierende Bauteil (1) und/oder der Schaufelfuß mit dem in dem Zwischenraum angeordneten Prüfkopf (6) zerstörungsfrei auf Materialfehler untersucht wird.

## Beschreibung

Die Erfindung betrifft ein Verfahren zur zerstörungsfreien Materialprüfung eines eine Aufnahmenut für den Schaufelfuß einer Schaufel einer Axialströmungsmaschine definierenden Bauteils, bei dem es sich insbesondere um eine Welle einer Turbine oder eines Verdichters oder eine an der Welle vorgesehene Radscheibe handelt, sowie eines Schaufelfußes einer Schaufel.

Es ist bekannt, dass zur Befestigung der Schaufeln in Axialströmungsmaschinen, wie Turbinen oder Verdichtern, Aufnahmenuten vorgesehen sind, deren Kontur an die Kontur der Schaufelfüße der Schaufeln angepasst ist. Die Aufnahmenuten, die auch als "Rotorklauen bezeichnet werden, sind beispielsweise entlang des Umfangs einer Welle oder einer an der Welle befestigten Radscheibe des Rotors der Strömungsmaschine äquidistant beabstandet vorgesehen und erstrecken sich in axialer Richtung der Strömungsmaschine durch die Welle bzw. die Radscheibe. Die Kontur der Aufnahmenuten entspricht der Kontur der Schaufelfüße der zu befestigten Schaufeln, wobei die Form in der Regel konkret derart gewählt ist, dass die Schaufelfüße in axialer Richtung in die Aufnahmenuten eingeschoben werden können, im montierten Zustand formschlüssig in der jeweiligen Aufnahmenut sitzen und bei Rotation des Rotors in radialer Richtung der Strömungsmaschine sicher gegen ein Lösen gehalten werden. Eine hinlänglich bekannte und Vielfach zum Einsatz kommende Kontur der Aufnahmenuten und korrespondierenden Schaufelfüßen ist zum Beispiel die sogenannten "Tannenbaum-Kontur".

Turbinenschaufeln mit Schaufelfüßen u.a. tannenbaumförmiger Kontur gehen beispielsweise aus der EP 2 282 010 A1 hervor.

Im Betrieb der Strömungsmaschine unterliegen die Schaufeln hohen mechanischen Belastungen. Endstufenschaufeln von Dampfturbinen beispielsweise zählen zu den am meisten belasteten Komponenten in einer Turbine. Aufgrund der hohen Belastung kann es im Bereich der Schaufelbefestigung, vor allem im Bereich der Aufnahmenuten sowohl auf Seiten der die Aufnahmenuten definierenden Bauteile als auch auf Seiten der in diesen aufgenommenen Schaufelfüße zu Ermüdungserscheinungen und Beschädigungen des Materials kommen. So entstehen beispielsweise an den Bauteilen mit den Aufnahmenuten betriebsbedingt mitunter Risse.

Es ist daher eine Aufgabe der vorliegenden Erfindung, ein Verfahren zur zerstörungsfreien Materialprüfung der eingangs genannten Art zu schaffen, das sich einfach, schnell und preiswert durchführen lässt.

Diese Aufgabe wird bei einem Verfahren der eingangsgenannten Art dadurch gelöst, dass im montierten Zustand der Prüfkopf eines Prüfgerätes zur zerstörungsfreien Materialprüfung in einem zwischen dem die Aufnahmenut definierenden Bauteil und dem Schaufelfuß im Bereich der Aufnahmenut gebildeten Zwischenraum angeordnet und insbesondere in dem Zwischenraum verfahren wird, und das die Aufnahmenut definierende Bauteil und/oder der Schaufelfuß mit dem in dem Zwischenraum angeordneten Prüfkopf zerstörungsfrei auf Materialfehler untersucht wird.

Der vorliegenden Erfindung liegt mit anderen Worten die Idee zugrunde, einen im montierten Zustand im Bereich der Aufnahmenut bestehenden Zwischenraum zu nutzen, um dort einen Prüfkopf für die zerstörungsfreie Materialprüfung des die Aufnahmenut definierenden Bauteils und/oder eines in der Aufnahmenut angeordneten Schaufelfußes einzubringen. Auf diese Weise wird es möglich, eine zerstörungsfreie Materialprüfung im montierten Zustand, das heißt, wenn der Schaufelfuß zur Befestigung der Schaufel in die Aufnahmenut eingesetzt ist, durchzuführen. Da die Untersuchung auf Materialverschleiß, insbesondere auf das Vorhandensein von Rissen im Befestigungsbereich der Schaufeln möglich ist, ohne dass die Schaufeln ausgebaut werden müssen, kann das erfindungsgemäße Verfahren einfach und schnell durchgeführt werden. Insbesondere können die mit einer Überprüfung einhergehenden Stillstandszeiten einer Axialströmungsmaschine unter Anwendung des erfindungsgemäßen Verfahrens optimiert werden.

Für die zerstörungsfreie Materialprüfung werden mit dem Prüfkopf des Prüfgerätes Messwerte erfasst, während der Prüfkopf in dem Zwischenraum angeordnet ist bzw. in diesem verfahren wird. Dabei kann prinzipiell jedes für die zerstörungsfreie Prüfung geeignete Prüfgerät zum Einsatz kommen. Beispielhaft seien Prüfgeräte für die Wirbelstrom- und die Ultraschallprüfung genannt, welche wenigstes einen Wirbelstrom- bzw. Ultraschallprüfkopf umfassen, der erfindungsgemäß in einen Zwischenraum im Bereich der Aufnahmenut eingebracht wird.

Für die zerstörungsfreie Prüfung des die Aufnahmenut definierenden Bauteils auf Oberflächenrisse kann zum Beispiel die Verwendung eines Wirbelstromprüfgerätes mit einem Wirbelstromprüfkopf besonders zweckmäßig sein, während die Verwendung eines Prüfgerätes mit Ultraschall-Prüfkopf besonders zweckmäßig für eine zerstörungsfreie Prüfung eines in einer Aufnahmenut sitzenden Schaufelfußes sein kann, der zumindest partiell mittels Ultraschall überdeckt werden kann, wenn der Ultraschallprüfkopf erfindungsgemäß in einem Zwischenraum angeordnet wird.

Erfindungsgemäß wird der Prüfkopf des Prüfgerätes in dem Zwischenraum insbesondere verfahren, also eine dynamische Messung mit bewegtem Prüfkopf durchgeführt, über welche ein größerer Bereich des zu prüfenden Bauteils auf Fehler, insbesondere Risse untersucht werden kann.

Der Prüfkopf wird bevorzugt in einem Zwischenraum angeordnet und insbesondere verfahren, der sich durch einen in axialer Richtung der Axialströmungsmaschine konstanten Querschnitt auszeichnet. Der Prüfkopf wird ferner in einer bevorzugten Ausgestaltung wenigstens einmal über die gesamte axiale Ausdehnung des Zwischenraumes in diesem verfahren.

Der Zwischenraum, welcher erfindungsgemäß genutzt wird, um einen Prüfkopf für die zerstörungsfreie Materialprüfung im montierten Zustand in dem Bereich der Aufnahmenut anzuordnen, kann ein solcher sein, welcher vorab gezielt zu diesem Zwecke vorgesehen wurde. Es kann sich somit um einen an geeigneter Stelle vorsorglich als "Prüflücke" eingebrachten Zwischenraum handeln. Bereits bei der Auslegung der Komponenten kann dies berücksichtigt werden, so dass beispielsweise die Aufnahmenuten und/oder die Schaufelfüße gezielt mit einer Form hergestellt werden, bei welcher an geeigneten Stellen im montierten Zustand derartige als "Prüflücken" dienende Zwischenräume gegeben sind.

Alternativ kann auch ein Zwischenraum genutzt werden, der aus anderem Grunde bereits vorhanden ist. So zeichnet sich eine besonders vorteilhafte Ausführungsform des erfindungsgemäßen Verfahrens dadurch aus, dass der Prüfkopf in einem Zwischenraum angeordnet und insbesondere verfahren wird, welcher durch eine mechanische Nachbearbeitung des die Aufnahmenut definierenden Bauteils und/oder des Schaufelfußes erhalten wurde, insbesondere, indem Materialfehler, die bevorzugt bei einer vorangegangenen zerstörungsfreien Materialprüfung detektiert wurden, aus dem die Aufnahmenut definierenden Bauteil oder dem Schaufelfuß entfernt, bevorzugt ausgefräst und/oder ausgeschliffen worden sind.

Nachdem beispielsweise ein eine Aufnahmenut definierendes Bauteil, wie etwa eine Welle oder ein Radscheibe, sowie daran befestigte Schaufeln ein erstes Mal im Betrieb gewesen sind, können diese zunächst im demontierten Zustand zerstörungsfrei auf das Vorhandensein von Fehlern, insbesondere Oberflächenrissen überprüft werden. Hierfür wird mittels eines Prüfkopfes eines geeigneten Prüfgerätes die Oberfläche des Bauteils mit Aufnahmenut(en) im Bereich der Aufnahmenut(en) und/oder die Oberfläche der Schaufelfüße zerstörungsfrei geprüft, wenn die Schaufeln ausgebaut sind.

Risse, die während der Betriebsdauer möglicherweise aufgetreten sind, werden dabei detektiert. Neben der Rissposition und deren Länge besteht auch die Möglichkeit, Risstiefen indirekt zu bestimmen. Die Bestimmung der Risstiefen erfolgt am genausten, indem man beispielsweise Stichproben der Anzeigen mechanisch bearbeitet, beispielsweise ausfräst und danach einer weiteren Rissprüfung unterzieht, bis keine Anzeigen mehr vorhanden sind. Unter Anzeigen sind dabei Messsignale zu verstehen, die im Rahmen eines geeigneten, zum Einsatz kommenden Prüfverfahrens erfasst wurden und einen vorgegebenen Wert überschreiten. Bei visuellen Prüfungen entsprechen diese z.B. Unregelmäßigkeiten, wie etwa Rissen an der Oberfläche. Wird eine Wirbelstromprüfung durchgeführt, handelt es sich beispielsweise um Amplituden, deren Höhe oder Phase gegenüber denjenigen, die in unbeschädigten Bereichen erfasst werden, abweichen. Im Rahmen der Ultraschallprüfung kann es sich zum Beispiel um Amplituden handeln oder deren Fehlen in Laufzeit und Winkel.

Werden Fehler wie Oberflächenrisse detektiert, können, um die betroffene Komponente wieder in einen betriebsbereiten Zustand zu bringen, die fehlerbehafteten Materialbereiche durch mechanische Nachbearbeitung entfernt werden. Die Entfernung der beschädigten Bereiche kann beispielsweise durch Ausfräsen oder Ausschleifen erfolgen. Auch kann eine Restlebensdauerbetrachtung unter Berücksichtigung üblicher Risswachstumsraten in Abhängigkeit von Werkstoffen, Temperaturen, mechanischen Belastungen und gegebenen Geometrien erfolgen.

Im Bereich der mechanischen Nachbearbeitung zur Fehlerentfernung, die je nach Beschädigung in dem Bauteil mit Aufnahmenut, in dem Schaufelfuß oder in beiden erfolgen kann, liegt dann im Bereich der Aufnahmenut eine Abweichung zwischen der Form des Schaufelfußes und des die Aufnahmenut definierenden Bauteils vor. Nachdem ein Schaufelfuß wieder in die zugehörige Aufnahmenut eingesetzt ist, entsteht dort, wo die Nachbearbeitung(en) erfolgte(n) ein Zwischenraum bzw. eine "Lücke". Wird an mehreren Stellen Material entfernt, können im montierten Zustand selbstverständlich auch mehrere Zwischenräume bzw. "Lücken" vorliegen.

Gemäß dieser Ausführungsform wird ein solcher, durch die Fehler-entfernende Nacharbeitung erhaltener Zwischenraum gezielt genutzt, um erfindungsgemäß einen Prüfkopf in diesem anzuordnen. Die Ausführungsform macht es damit insbesondere möglich, bereits mechanisch nachbearbeitete Bauteile mit einer (oder mehreren) Aufnahmenut(en) beziehungsweise darin angeordnete Schaufelfüße ohne großen Aufwand einer erneuten zerstörungsfreien Prüfung zu unterziehen, wobei insbesondere der Bereich der Nachbearbeitung, also die Nacharbeitskontur, untersucht werden kann.

Zum Ausfräsen der Fehler-, insbesondere Riss-behafteten Bereiche kann bevorzugt eine Materialentfernung über die gesamte axiale Erstreckung des Bauteils mit Aufnahmenut bzw. des Schaufelfußes, also vom Dampfeintritt bis zum Dampfaustritt, mit definierter Schnittform erfolgt sein. Der Zwischenraum ist dann durch eine hieraus resultierende, längliche Nacharbeitsnut definiert, welche sich durch einen in axialer Richtung konstanten Querschnitt auszeichnet und zwei offene Stirnseiten aufweist.

Da das erfindungsgemäße Verfahren im montierten Zustand durchgeführt wird und daher geringem Aufwand verbunden ist, kann eine besonders effiziente und zuverlässige Überwachung des Zustandes von Komponenten von Axialströmungsmaschinen erfolgen. Es kann auch eine bessere Planung und ein optimiertes Servicekonzept erreich werden, insbesondere können Reparaturen, der Austausch von Komponenten sowie Bestell- und Lieferzeiten optimiert werden.

Darüber hinaus wird es durch das erfindungsgemäße Verfahren auch möglich, eine dauerhafte, insbesondere auch während des Betriebs der Axialströmungsmaschine erfolgende Überwachung umzusetzen. Dafür ist dann vorgesehen, dass der in dem Zwischenraum angeordnete Prüfkopf über einen vorgegebenen Zeitraum, der insbesondere einen Betriebszeitraum der Axialströmungsmaschine einschließt, in dem Zwischenraum verbleibt und insbesondere das die Aufnahmenut definierende Bauteil und/oder der Schaufelfuß mit dem in dem Zwischenraum angeordneten Prüfkopf während des Betriebes der Axialströmungsmaschine zerstörungsfrei auf Materialfehler untersucht wird.

Wird der Prüfkopf gemäß dieser Ausführungsform in den Zwischenraum eingebracht und in diesem, insbesondere auch während des Betriebes belassen, können Beschädigungen, insbesondere Risse online detektiert werden und es ist möglich, hierauf zeitnah zu reagieren. Eine derartige dauerhafte Instrumentierung ist beispielsweise besonders interessant, wenn bei einer vorangegangenen Überprüfung einer Komponente bereits Fehler, wie etwa Oberflächenrisse detektiert wurden, diese jedoch nicht komplett entfernt werden konnten. Das kommt beispielsweise vor, wenn Risse vorlagen, deren Risstiefe das maximale Maß einer Nacharbeit überschritten haben. Werden entsprechende Stellen mit einer Dauerinstrumentierung versehen, kann ein Risswachstum online erfasst werden, bei einer Wirbelstromsonde beispielsweise in Form einer Änderung einer Amplitude oder Phase.

Um die mit dem dauerhaft in dem Zwischenraum angeordneten Prüfkopf erfassten Messwerte in zweckmäßiger Ausgestaltung an eine außerhalb des Zwischenraums angeordnete Erfassungs- und Auswerteeinheit weiterzugeben, kann der Prüfkopf beispielsweise mit Mitteln zur Funkübertragung ausgestattet sein oder es ist eine Kabelverbindung vorgesehen.

Insbesondere eine erneute zerstörungsfreie Prüfung einer aufgrund vorangegangener Fehlerentfernung bestehenden Nacharbeitsnut kann erfindungsgemäß mit geringem Aufwand erfolgen. Dies stell einen großen Vorteil dar, da insbesondere dort, wo bereits eine mechanische Nachbearbeitung, insbesondere zur Rissentfernung erfolgt ist, die Wahrscheinlichkeit, dass erneut Beschädigungen, insbesondere Risse auftreten in der Regel besonders hoch ist.

Es kann eine ggf. bereits berechnete Restlebensdauer dynamisch durch periodische Prüfung justiert und gar verlängert werden. Wird beispielsweise für eine mechanisch nachbearbeite Stelle insbesondere unter der Annahme, dass neue Risse mit hoher Wahrscheinlichkeit auftreten, abgeschätzt, kann über das erfindungsgemäße Verfahren auf einfache Weise überprüft werden, ob dies tatsächlich der Fall ist. Stellt sich nach dessen Durchführung heraus, dass zu einem erwarteten Zeitpunkt noch keine Beschädigung gegeben ist, kann offensichtlich eine längere Restlebensdauer angesetzt werden.

Je nach Gesamtkonstellation kann beispielsweise auch eine Wiederholungsprüfung der Niederdruck-Endstufenschaufeln ohne Öffnen der Turbine vom Kondensator aus erfolgen. Befindet sich eine Nacharbeitsnut in einem in der letzten Laufreihe einer Niederdruckturbine vorgesehenen Bauteil mit Aufnahmenut, etwa einer Radscheibe, ist die Dampfaustrittsseite, insbesondere eine der Stirnseiten des Bauteils mit Aufnahmenut, durch den Kondensator direkt zugänglich. Der Zugang kann zum Beispiel über ein Mannloch, üblicherweise über ein in dem Kondensator angeordnetes Gerüst, erfolgen.

Selbstverständlich ist es möglich, dass mehr als ein Prüfkopf in dem Zwischenraum angeordnet und insbesondere in diesem Verfahren wird. Auch können in dem Fall, dass mehrere Zwischenräume vorhanden sind, mehrere, insbesondere alle vorhandenen Zwischenräume auf die erfindungsgemäße Weise genutzt werden, um jeweils einen Prüfkopf oder auch mehrere Prüfkopfe in diese einzubringen und insbesondere in diesen zu verfahren. Hierdurch kann ein größerer Bereich des Bauteils mit der Aufnahmenut und/oder des Schaufelfußes mit der erfindungsgemäßen zerstörungsfreien Materialprüfung im montierten Zustand abgedeckt werden.

Gemäß einer besonders zweckmäßigen Ausführungsform wird ein Prüfkopf verwendet, dessen Querschnitt an den Querschnitt des Zwischenraums angepasst ist. Der Prüfkopf kann dann insbesondere formschlüssig in dem Zwischenraum sitzen, so dass er in einer vorgegebenen Orientierung innerhalb des Zwischenraumes gehalten wird, wodurch besonders zuverlässige Messergebnisse erhalten werden. Auch ist ein Prüfkopf gemäß dieser Ausführungsform, wenn er beispielsweise in einem Zwischenraum mit in axialer Richtung konstantem Querschnitt in axialer Richtung verfahren wird, während der gesamten dynamischen Messung gleichmäßig orientiert, so dass über die gesamte axiale Erstreckung des Zwischenraumes vergleichbare Messwerte erhalten werden können.

Der bzw. die im Rahmen des erfindungsgemäßen Verfahrens zum Einsatz kommenden Prüfköpfe können insbesondere speziell angefertigt werden. Beispielsweise wird für eine Anordnung mit einem Zwischenraum oder mehreren Zwischenräumen gegebenen Querschnitts ein Prüfkopf, insbesondere ein Wirbelstrom- oder Ultraschallprüfkopf hergestellt, dessen Querschnitt dem des Zwischenraums entspricht. Dabei kann der Prüfkopf dann beispielsweise einen Grundkörper aufweisen, dessen Form an diejenige des Zwischenraumes angepasst ist, und in den Grundkörper kann ein Prüfelement oder können mehrere Prüfelemente, wie etwa Spulen im Falle des Wirbelstromprüfkopfes, angeordnet sein.

Auch ist es möglich, dass im Rahmen des erfindungsgemäßen Verfahrens mehrere zerstörungsfreie Prüfverfahren in Kombination zum Einsatz kommen. Z.B. kann hierzu ein Prüfkopf herangezogen werden, welcher Prüfelemente für mehr als ein zerstörungsfreies Materialprüfverfahren aufweist. Auch können in dem Zwischenraum gleichzeitig oder nacheinander mehrere für unterschiedliche Prüfverfahren ausgestaltete Prüfköpfe angeordnet und insbesondere verfahren werden. Beispielsweise kann sowohl eine Wirbelstrom- als auch ein Ultraschallprüfkopf in dem Zwischenraum angeordnet und insbesondere verfahren werden und zwar zeitgleich oder nacheinander.

In der Regel hat ein aufgrund von mechanischer Nachbearbeitung zur Rissentfernung entstandener Zwischenraum einen Durchmesser in der Größenordnung von wenigen, beispielsweise bis zu 3 Millimetern, sodass in diesem Falle zweckmäßiger Wiese ein Prüfkopf mit einem entsprechenden Durchmesser von ebenfalls nur wenigen, beispielsweise bis zu 3 Millimetern zum Einsatz kommt.

Eine weitere Ausführungsform des erfindungsgemäßen Verfahrens zeichnet sich dadurch aus, dass der Prüfkopf in einem Zwischenraum angeordnet und insbesondere verfahren wird, welcher zumindest größtenteils durch eine in dem die Aufnahmenut definierenden Bauteil vorgesehene Ausnehmung gebildet wird. Bei der Ausnehmung in dem Bauteil mit der Aufnahmenut kann es sich insbesondere um eine solche handeln, die durch Entfernen von betriebsbedingt beschädigtem Material aus dem Bauteil erhalten wurde, bevorzugt um eine beispielsweise durch Ausfräsen erhaltene Nacharbeitsnut.

Eine Ausnehmung in dem die Aufnahmenut definierenden Bauteil ist insbesondere an der Seite, an welcher vor der Nachbearbeitung des Bauteils die Originalkontur der Aufnahmenut verlief offen und im montierten Zustand wird die diese offene Seite der Ausnehmung durch einen in der Aufnahmenut sitzenden Schaufelfuß verschlossen. Der Zwischenraum wird dann durch die Ausnehmung und den diese im montierten Zustand an einer Seite verschließenden Schaufelfuß definiert.

Alternativ dazu kann der Prüfkopf auch in einem Zwischenraum angeordnet und insbesondere verfahren werden, welcher zumindest größtenteils durch eine in dem Schaufelfuß vorgesehene Ausnehmung gebildet wird oder aber, der Zwischenraum wird durch eine sowohl innerhalb des Schaufelfußes als auch innerhalb des Bauteils mit der Aufnahmenut liegende Ausnehmung definiert, ist also durch im montierten Zustand aneinandergrenzende Ausnehmungen in beiden Komponenten festgelegt.

Weiterhin kann vorgesehen sein, dass der Prüfkopf in einem Zwischenraum angeordnet und insbesondere verfahren wird, welcher sich über die gesamte Ausdehnung der Aufnahmenut und/oder des Schaufelfußes in axialer Richtung der Axialströmungsmaschine erstreckt. Der Zwischenraum ist weiterhin bevorzugt von einer Stirnseite oder beiden Stirnseiten des die Aufnahmenut definierenden Bauteils und/oder des Schaufelfußes her zugänglich.

Insbesondere für den Fall, dass aufgrund einer vorangegangenen Detektion von Fehlern eine mechanische Nachbearbeitung von dem Bauteil mit Aufnahmenut und/oder dem Schaufelfuß erforderlich war, kann der Zwischenraum durch eine sich in axialer Richtung erstreckende Nacharbeitsnut in dem Bauteil mit Aufnahmenut oder dem Schaufelfuß oder in beiden gebildet werden, die sich über die gesamte axiale Ausdehnung der Aufnahmenut und des Schaufelfußes, also vom Dampfeintritt bis zum Dampfaustritt erstreckt. Der durch eine solche Nacharbeitskontur definierte Zwischenraum ist im montierten Zustand, also wenn der Schaufelfuß in die Aufnahmenut eingesetzt, insbesondere eingeschoben ist, zu beiden Enden hin offen und kann auf besonders komfortable Weise für die Durchführung des erfindungsgemäßen Verfahrens verwendet werden.

Es kann weiterhin vorgesehen sein, dass der Prüfkopf in einem länglichen Zwischenraum angeordnet und insbesondere in Längsrichtung in diesem verfahren wird, wobei sich der längliche Zwischenraum bevorzugt in axialer Richtung der Axialströmungsmaschine erstreckt.

Insbesondere kann der Zwischenraum durch eine sich über die gesamte axiale Erstreckung der Aufnahmenut beziehungsweise des Schaufelfußes erstreckende Nachbearbeitungsnut gebildet werden, die einen in axialer Richtung konstanten Querschnitt aufweist. Eine solche kann beispielsweise erhalten worden sein, indem ein Fräswerkzeug mit passender Kontur von der einen bis zur anderen Stirnseite des Schaufelfußes beziehungsweise des die Aufnahmenut definierenden Bauteils durch die Komponente durchgezogen wurde, insbesondere, um rissbehaftetes Material zu entfernen.

In Weiterbildung des erfindungsgemäßen Verfahrens wird der Prüfkopf in einem Zwischenraum angeordnet und insbesondere verfahren, der eine Krümmung aufweist. Dabei kann die Krümmung einer Krümmung der Aufnahmenut entsprechen. Beispielsweise kann der Schaufelfuß eine tannenbaumförmige Kontur haben, dessen Rillen und Vorsprünge einen gekrümmten Verlauf haben. Der Zwischenraum kann dann beispielsweise durch eine Nachbearbeitungsnut definiert sein, die eine Krümmung aufweist, welche derjenigen der Rillen und Vorsprünge der Tannenbaumkontur folgt.

In vorteilhafter Weiterbildung kann ein Prüfkopf verwendet werden, der mit einem Führungselement verbunden ist. Bei dem Führungselement kann es sich um einen Führungsstab handeln. Diese Ausgestaltung ermöglicht es insbesondere, dass der Prüfkopf auf komfortable Weise von einer offenen Stirnseite des Zwischenraums her in diesen eingeführt und insbesondere in axialer Richtung durch diesen bewegt wird, um eine dynamische Messung zur zerstörungsfreien Materialprüfung durchzuführen. Mittels des Führungselementes kann der Prüfkopf gleichmäßig in dem Zwischenraum verfahren werden, um besonders zuverlässige Messergebnisse zu erhalten.

Zeichnet sich der Zwischenraum durch eine Krümmung aus, kommt bevorzugter Weise ein Führungselement, insbesondere Führungsstab zum Einsatz, der ebenfalls gekrümmt ist. In zweckmäßiger Ausgestaltung ist die Krümmung des Führungselementes dann an die Krümmung des Zwischenraumes angepasst.

Auch ist es möglich, dass mehrere Prüfköpfe in dem Zwischenraum angeordnet und insbesondere in diesem Verfahren werden. In diesem Falle kann insbesondere vorgesehen sein, dass die mehreren Prüfköpfe an einem Führungselement, insbesondere einem Führungsstab angeordnet sind.

Erfolgt eine dynamische Messung, kann ferner in zweckmäßiger Ausgestaltung vorgesehen sein, dass wenigstens ein Weggeber verwendet wird, um den bei bewegtem Prüfkopf erfassten Messwerten eine insbesondere axiale Ortskoordinate zuordnen zu können. Als Weggeber kann beispielsweise ein Stahlseilencoder zum Einsatz kommen, wobei das freie Ende des Stahlseils dann insbesondere an dem Prüfkopf befestigt ist. Andere Weggeber, die beispielsweise optisch, etwa mit Laserlicht arbeiten, können selbstverständlich ebenfalls Verwendung finden.

Wird ein Weggeber herangezogen, kann insbesondere ein ortsabhängiger Messdatensatz gespeichert werden. Die gespeicherten Daten können beispielsweise direkt nach der Messung in einem Analyseverfahren ortsrichtig ausgewertet werden. Bildgebende Verfahren (z.B. C-Scan Darstellungen) profitieren dabei von einer ortsrichtigen Darstellung der Messdaten besonders. Die Messdaten können, da Befunde, insbesondere detektierte Risse zusammen mit der zugehörigen axialen Position abgespeichert sind, für weitere, folgende mechanische Maßnahmen, insbesondere eine mechanische Rissentfernung, herangezogen werden. Alternativ dazu, dass der Prüfkopf verfahren wird, kann eine dynamische Messung auch "simuliert" werden, wenn ein Prüfkopf mit einer Mehrzahl von Prüfelementen zum Einsatz kommt, die elektronisch nacheinander aktiviert werden.

Weitere Merkmale und Vorteile der vorliegenden Erfindung werden anhand der nachfolgenden Beschreibung eines Ausführungsbeispiels eines erfindungsgemäßen Verfahrens unter Bezugnahme auf die beiliegende Zeichnung deutlich.

Darin ist:
- Figur 1: eine schematische Teilansicht einer mechanisch nachbearbeiteten Radscheibe des Rotors einer Dampfturbine mit tannenbaumförmigen Aufnahmenuten zur Befestigung von Laufschaufeln,
- Figur 2: eine weitere schematische Teilansicht einer mechanisch nachbearbeiteten Radscheibe des Rotors einer Dampfturbine mit tannenbaumförmigen Aufnahmenuten sowie einen in einem durch die Nachbearbeitung entstandenen Zwischenraum angeordneten Prüfkopf,
- Figur 3: eine vergrößerte Ansicht des Prüfkopfs aus Figur 2 in schematischer Darstellung.

Gleiche Bezugsziffern bezeichnen nachfolgend gleiche oder gleichartig ausgebildete Bauteile.

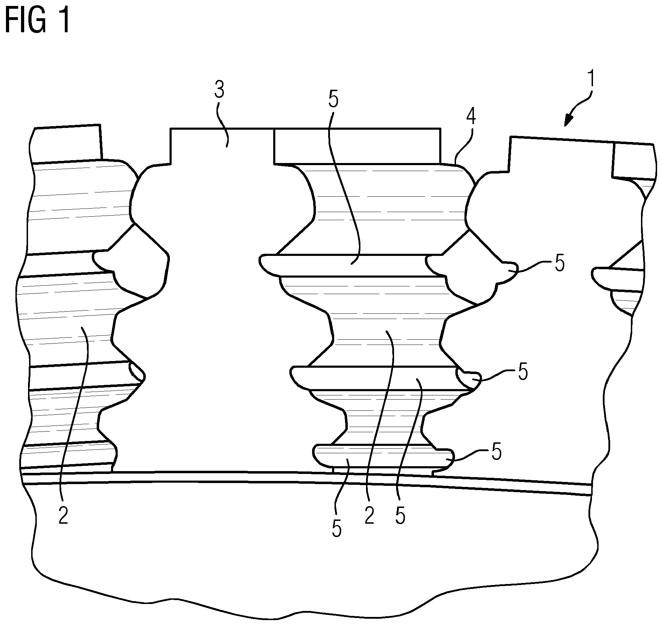

Die Figur 1 zeigt eine Teilansicht einer Radscheibe 1 eines in der Figur 1 nicht weiter dargestellten Rotors einer Dampfturbine. Die Radscheibe 1 ist an einer in der Figur 1 ebenfalls nicht dargestellten Welle des Rotors angeordnet.

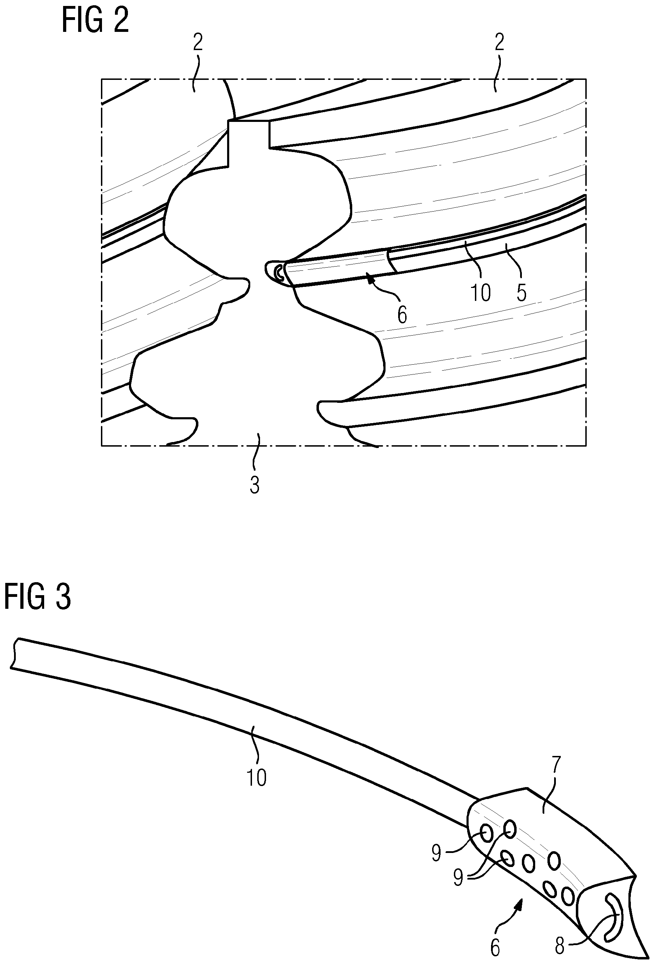

In der Radscheibe 1 sind zur Befestigung von Laufschaufeln entlang des Umfangs mehrere, in Umfangsrichtung äquidistant beabstandete tannenbaumförmige Aufnahmenuten 2 vorgesehen. Die Aufnahmenuten 2 erstrecken sich in axialer Richtung des Rotors der Dampfturbine durch die Radscheibe 1 über deren gesamte axiale Ausdehnung, also von der in Figur 1 nach vorne weisenden Stirnseite 3 der Radscheibe 1 bis zu der in Figur 1 nach hinten weisenden Stirnseite 4. In der Teilansicht gemäß Figur 1 sind von der Vielzahl der Aufnahmenuten 2 in der Radscheibe 1 nur zwei benachbarte Aufnahmenuten 2 zu erkennen. Die Aufnahmenuten 2 zeichnen sich durch einen gekrümmten Verlauf aus, was in der Figur 1 aufgrund der vereinfachten Darstellung nicht erkennbar, jedoch in der Figur 2, welche eine weitere schematische Teilansicht der Radscheibe 1 aus Figur 1 zeigt, dargestellt ist.

In die Aufnahmenuten 2 können tannenbaumförmige Schaufelfüße von Laufschaufeln in axialer Richtung eingeschoben werden. Die Schaufelfüße weisen eine zu den Aufnahmenuten 2 korrespondierende Form auf, so dass sie im montierten Zustand zumindest im Wesentlichen formschlüssig in den Aufnahmenuten 2 sitzen und sie sind - aufgrund der tannenbaumförmigen Kontur - bei Rotation des Rotors gegen ein Lösen in radialer Richtung gesichert. In der Figur 1 sind aus Darstellungsgründen die Laufschaufeln mit deren Schaufelfüßen nicht gezeigt. Ist die Radscheibe 1 vollständig mit Laufschaufeln bestückt, sitzt also in jeder Aufnahmenut 2 der Schaufelfuß einer Laufschaufel, bilden die Laufschaufeln einen einer Vielzahl von Laufschaufelkränzen des Rotors der Dampfturbine.

Die Radscheibe 1 war bereits im Betrieb und ist im Rahmen einer vorangegangenen Revision auf ihren Zustand überprüft worden. Hierzu wurden die Laufschaufeln aus der Radscheibe 1 ausgebaut, indem deren Schaufelfüße in axialer Richtung aus den Aufnahmenuten 2 herausgeschoben wurden. Im Anschluss an den Ausbau der Laufschaufeln wurde mittels eines Prüfkopfes eines Wirbelstromprüfgerätes die Oberfläche der Radscheibe 1 im Bereich der Aufnahmenuten 2 zerstörungsfrei auf das Vorhandensein von Oberflächenrissen untersucht. Dabei wurden im Bereich der in Figur 1 rechten Aufnahmenut 2 Oberflächenrisse detektiert und die rissbehafteten Bereiche der Radscheibe 1 wurden durch Ausfräsen im Bereich dieser Aufnahmenut 2 entfernt. Konkret erfolgte die Entfernung von rissbehaftetem Material bei dem dargestellten Ausführungsbeispiel an insgesamt sechs Stellen jeweils über die gesamte axiale Erstreckung der Radscheibe 1 im Bereich der Aufnahmenut 2 mit definierter Schnittform eines in etwa Halboval-förmigen Querschnittes. Infolge dessen wurden insgesamt sechs längliche Nacharbeitsnuten 5 erhalten, welche im Bereich der Aufnahmenut 2 liegen und sich - wie in der Figur 1 erkennbar - in axialer Richtung von der in Figur 1 nach vorne weisenden Stirnseite 3 der Radscheibe 1 bis zu der in Figur 1 nach hinten weisenden Stirnseite 4 durch die Radscheibe 1 erstrecken. Jede Nacharbeitsnut 5 ist dort, wo die Originalkontur der Aufnahmenut 2 verlief, offen, wobei die offene Seite im montierten Zustand, wenn ein Schaufelfuß in der Aufnahmenut 2 sitzt, durch den Schaufelfuß verschlossen wird. Die sechs Nacharbeitsnuten 5 in der rechten Aufnahmenut 2 zeichnen sich ferner, wie ebenfalls aus der Figur 1 hervorgeht, durch einen in axialer Richtung der Radscheibe 1 konstanten Querschnitt aus.

Infolge der mechanischen Nachbearbeitung durch Ausfräsen liegt im Bereich der Nacharbeitskonturen, also im Bereich der sechs Nacharbeitsnuten 5 eine Abweichung zwischen der Form des Bauteils mit Aufnahmenut 2 und der Form eines in diese einzuschiebenden Schaufelfußes vor. Ist ein Schaufelfuß in die Aufnahmenut 2 eingesetzt, liegen daher im Bereich der vorangegangene Nachbearbeitungen zur Rissentfernung "Lücken" vor, welche bei dem dargestellten Ausführungsbeispiel durch die jeweilige Nacharbeitsnut 5 und an deren offenen Seite im montierten Zustand durch den in der Aufnahmenut sitzenden Schaufelfuß definiert wird.

Die Form und Lage der Nacharbeitsnuten 5 kann besonders deutlich über einen Vergleich der rechten und der linken Aufnahmenut 2 in Figur 1 erkannt werden. An der linken Aufnahmenut 2 war keine mechanische Nachbearbeitung erforderlich, so dass hier die Originalkontur der Aufnahmenut 2 vorliegt.

Nachdem die Radscheibe 1 nach dem Ausbau der Laufschaufeln überprüft, im Bereich der rechten Aufnahmenut 2 zur Rissentfernung durch Ausfräsen nachbearbeitet und die Laufschaufeln wieder eingebaut wurden, waren die Komponenten wieder für eine vorgegebene Zeit im Betrieb. Zur erneuten Überprüfung des Zustandes der Radscheibe 1 im Bereich der Aufnahmenut 2 wird anschließend das Verfahren zur zerstörungsfreien Materialprüfung gemäß der vorliegenden Erfindung durchgeführt.

Erfindungsgemäß werden bei dem dargestellten Ausführungsbeispiel die aufgrund der bereits erfolgten Nachbearbeitung zur Rissentfernung im montierten Zustand zwischen der Radscheibe 1 und dem in die Aufnahmenut 2 eingesetzten Schaufelfuß vorliegenden Zwischenräume, welche durch die in der Radscheibe 1 zuvor durch Ausfräsen des rissbehafteten Materials eingebrachten sechs Nacharbeitsnuten 5 definiert sind, gezielt genutzt, um im montierten Zustand den Prüfkopf 6 eines Prüfgerätes in diesen anzuordnen und zu verfahren. Konkret wird im montierten Zustand ein Wirbelstromprüfkopf 6 eines Wirbelstromprüfgerätes in die Nacharbeitsnuten 5 eingebracht, um die Radscheibe 1 im Bereich der jeweiligen Nacharbeitsnut 5 erneut auf das Vorhandensein von Fehlern, insbesondere Oberflächenrissen zu überprüfen. Der in eine Nacharbeitsnut 5 eingesetzte Wirbelstromprüfkopf ist in Figur 2 gezeigt. Es sei angemerkt, dass auch in der Figur 2 die in den Aufnahmenuten 3 sitzenden Schaufelfüße nicht dargestellt sind. Eine vergrößerte schematische Darstellung des Wirbelstromprüfkopfes 6 kann der Figur 3 entnommen werden.

Wie in den Figuren erkennbar, weist der Wirbelstromprüfkopf 6 einen Grundkörper 7 mit einem Querschnitt auf, welcher an den Querschnitt der Nacharbeitsnuten 5 angepasst ist, so dass der Wirbelstromprüfkopf 6 zumindest im Wesentlichen formschlüssig in einer Nacharbeitsnut 5 sitzt, wenn er in diese im montierten Zustand eingebracht wurde. Bei dem dargestellten Ausführungsbeispiel ist der Grundkörper 7 aus Kunststoff gefertigt.

An dem Wirbelstromprüfkopf 6 ist, wie in den Figuren 2 und 3 erkennbar, an der in den Figuren nach vorne weisenden Stirnseite des Grundkörpers 7 ein Befestigungselement 8 für einen Weggeber, insbesondere ein Encodersystem vorgesehen. Vorliegend dient das Befestigungselement 8 dem Zweck, dass das freie Ende des Stahlseils eines Stahlseilencoders an diesem befestigt werden kann. Der Stahlseilencoder ist in der Figur 2 nicht dargestellt.

Die Verwendung eines Weggebers macht es möglich, dass den dynamisch erfassten Messwerten die jeweilige axiale Ortskoordinate zugeordnet wird, so dass ein ortsabhängiger Messdatensatz gespeichert werden kann. Die gespeicherten Daten können beispielsweise direkt nach der Messung in einem Analyseverfahren ortsrichtig ausgewertet werden. Bildgebende Verfahren (z.B. C-Scan Darstellungen) profitieren dabei von einer ortsrichtigen Darstellung der Messdaten besonders. Die Messdaten können, da Befunde, insbesondere detektierte Risse zusammen mit der zugehörigen axialen Position abgespeichert sind, für weitere, folgende mechanische Maßnahmen, insbesondere eine mechanische Rissentfernung, herangezogen werden.

In dem Grundkörper 7 sind ferner, wie in Figur 3 erkennbar, insgesamt sieben, vorliegend durch Spulen gebildete Prüfelemente 9 für die Wirbelstrommessung, in der in Figur 3 nach links weisenden Seite des Grundkörpers 7 eingelassen. Somit kann bei dem dargestellten Ausführungsbeispiel mit dem Wirbelstromprüfkopf 6 die Oberfläche der Radscheibe 1 im Bereiche der Nacharbeitsnuten 5 überprüft werden.

Alternativ zu dem dargestellten Ausführungsbeispiel können an der nach rechts, nach oben und/oder nach unten weisenden Seite(n) des Grundkörpers 7 Prüfelemente 9 eingelassen sein, um mit dem Wirbelstromprüfkopf 6 das Material zu allen Seiten hin, insbesondere auch Material des nicht dargestellten Schaufelfußes zerstörungsfrei auf Oberflächenrisse zu überprüfen.

Durch den in seiner Form an die Form der Nacharbeitsnuten 5 angepassten Grundkörper 7 werden die sieben Prüfelemente 9 in einer vorgegebenen Lage gehalten, wenn der Prüfkopf 6 in einer Nacharbeitsnut 5 angeordnet ist und in dieser verfahren wird, so dass besonders zuverlässige und vergleichbare Messergebnisse erhalten werden können.

Der in den Figuren 2 und 3 erkennbare Wirbelstromprüfkopf 6 wurde vorab gezielt hergestellt, wobei die Form des Grundkörpers 7 in Abhängigkeit der Form der bestehenden, durch die Nacharbeitsnuten 5 definierten Zwischenräume gewählt wurde.

Da bei dem dargestellten Ausführungsbeispiel alle sechs Nacharbeitsnuten 5 den gleichen Querschnitt aufweisen, sitzt der Wirbelstromprüfkopf 6 in allen Nacharbeitsnuten 5 zumindest im Wesentlichen formschlüssig.

Liegen alternativ zu dem beschriebenen Ausführungsbeispiel Nacharbeitsnuten 5 unterschiedlicher Form vor, kommen in zweckmäßiger Ausgestaltung Wirbelstromprüfköpfe 6 mit Grundkörpern 7 entsprechender unterschiedlicher Form zum Einsatz.

Zum komfortablen Einbringen des Wirbelstromprüfkopfes 6 in die durch die Nacharbeitsnuten 5 definierten Zwischenräume und das komfortable Verfahren des Prüfkopfes in axialer Richtung ist der Wirbelstromprüfkopf 6 mit einem Führungsstab 10 verbunden. Ein Anwender kann den Führungsstab 10 bequem greifen, den Prüfkopf 6 in eine der Nacharbeitsnuten 5 einführen, in axialer Richtung über deren gesamte Ausdehnung verfahren und anschließend wieder herausholen.

Wie in der Figur 2 erkennbar, zeichnet sich die tannenbaumförmige Aufnahmenut 2 durch eine leichte Krümmung aus. In der Figur 1 ist dies aus Gründen der Vereinfachung nicht dargestellt. Wie ebenfalls der Figur 2 entnommen werden kann, zeichnen sich auch die Nacharbeitsnuten 5 durch eine Krümmung aus, welche der Krümmung der Aufnahmenut 2 entspricht.

Um der Krümmung bequem folgen zu können, ist der Führungsstab 10, welcher an dem Wirbelstromprüfkopf 6 befestigt ist, bei dem dargestellten Ausführungsbeispiel ebenfalls gekrümmt ausgebildet. Die Krümmung entspricht der Krümmung der Aufnahmenut 2 und der Nacharbeitsnuten 5.

Da die axiale Ausdehnung der Radscheibe 1 im Bereich der Aufnahmenut 2 und somit die axiale Ausdehnung der Nacharbeitsnuten 5 die axiale Ausdehnung des Prüfkopfes 6, wie in Figur 2 erkennbar, deutlich überschreitet, wird der Prüfkopf 6 für die zerstörungsfreie Materialprüfung mit Hilfe des Führungsstabes 10 über die gesamte Länge der Nacharbeitsnuten 5 in axialer Richtung in diesen Verfahren und eine dynamische Messung durchgeführt.

Im Ergebnis kann eine erneute zerstörungsfreie Materialprüfung der Radscheibe 1 im Bereich der Aufnahmenut 2, konkret im Bereich der Nacharbeitsnuten 5 auf besonders einfache und komfortable Weise durchgeführt werden. Da das erfindungsgemäße Verfahren zur zerstörungsfreien Materialprüfung im montierten Zustand, also dann, wenn die Schaufelfüße in die Aufnahmenuten 2 der Radscheibe 1 eingesetzt sind, erfolgen kann, ist der mit dem Verfahren verbundene Aufwand gering. Es kann eine besonders effiziente, kostengünstige und zuverlässige Überwachung des Zustandes von Turbinenkomponenten erfolgen.

Da eine erneute zerstörungsfreie Prüfung der Nacharbeitsnuten 5 erfindungsgemäß mit vergleichsweise geringem Aufwand möglich ist, kann auch dynamisch eine bereits berechnete Restlebensdauer durch periodische Prüfung justiert und gar verlängert werden. Insbesondere kann eine zuvor errechnete Lebensdauer eines Bauteils mit Aufnahmenut(en) bzw. eines Schaufelfußes erfindungsgemäß durch effiziente, leicht durchführbare Messungen überprüft werden. Beträgt zum Beispiel eine berechnete Lebensdauer 3 Jahre und ist davon auszugehen, dass in einem Bereich des Bauteils bzw. Schaufelfußes, der insbesondere zur Rissentfernung bereits mechanisch nachbearbeitet wurde, mit hoher Wahrscheinlichkeit neue Risse auftreten, kann dieser Bereich, bei dem es sich insbesondere um die Kontur eine Nacharbeitsnut handeln kann, mit dem erfindungsgemäßen Verfahren einfach und effizient erneut überprüft werden. Für den Fall, dass bei einer anschließenden, erfindungsgemäßen Überprüfung keine weiteren Anzeigen registriert, also keine neuen Risse detektiert werden, kann die Berechnung z.B. wieder auf 0 gesetzt werden und die abgeschätzte Lebensdauer gilt für ein weiteres, nun möglicherweise abweichendes Intervall.

Es wird eine bessere Planung und ein optimiertes Servicekonzept für eine Dampfturbine möglich. Insbesondere können Reparaturen, der Austausch von Komponenten sowie Bestell- und Lieferzeiten optimiert werden.

Bei dem dargestellten Ausführungsbeispiel ist nur ein Wirbelstromprüfkopf 6 zum Einsatz gekommen, der nacheinander in die sechs Nacharbeitsnuten eingebracht und in axialer Richtung entlang dieser verfahren wird, um den Zustand der Radscheibe 1 im Bereich der Nacharbeitskonturen zu überprüfen. Selbstverständlich ist es möglich, dass alternativ zu den dargestellten Ausführungsbeispielen mehrere Prüfköpfe zum Einsatz kommen, insbesondre können auch mehrere Prüfköpfe an einem Führungsstab vorgesehen sein.

Kommen mehrere Prüfköpfe im Rahmen des erfindungsgemäßen Verfahrens zum Einsatz, kann es sich dabei auch um unterschiedliche Prüfkopfe handeln, z.B. um wenigstens einen Wirbelstrom- und wenigstens einen Ultraschallprüfkopf, die gemeinsam oder auch nacheinander in einen Zwischenraum eingebracht werden.

Bei dem dargestellten Ausführungsbeispiel ist konkret ein Wirbelstromprüfkopf zum Einsatz gekommen, alternativ kann auch jeder andere Prüfkopf, mit dem eine zerstörungsfreie Materialprüfung möglich ist, verwendet werden. Rein beispielhaft sei das Ultraschall-Prüfverfahren genannt. Dieses kann insbesondere zum Einsatz kommen, um alternativ oder zusätzlich zu der Überprüfung der Radscheibe 1 im Bereich der Nacharbeitsnuten 5 mittels Wirbelstrom, einen in der Aufnahmenut 2 sitzenden Schaufelfuß zerstörungsfrei zu überprüfen.

Alternativ oder zusätzlich dazu, dass wie bei dem beschriebenen Ausführungsbeispiel Zwischenräume erfindungsgemäß genutzt werden, die aufgrund einer vorangegangenen Rissentfernung vorhanden waren, können auch Zwischenräume genutzt werden, die gezielt zu diesem Zwecke vorgesehen wurden.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verfahren zur zerstörungsfreien Materialprüfung eines eine Aufnahmenut (2) für den Schaufelfuß einer Schaufel einer Axialströmungsmaschine definierenden Bauteils, bei dem es sich insbesondere um eine Welle einer Turbine oder eines Verdichters oder eine an der Welle vorgesehene Radscheibe (1) handelt, sowie eines Schaufelfußes einer Schaufel,
**dadurch gekennzeichnet, dass**
im montierten Zustand der Prüfkopf (6) eines Prüfgerätes zur zerstörungsfreien Materialprüfung in einem zwischen dem die Aufnahmenut (2) definierenden Bauteil (1) und dem Schaufelfuß im Bereich der Aufnahmenut (2) gebildeten Zwischenraum angeordnet und insbesondere in dem Zwischenraum verfahren wird, und das die Aufnahmenut (2) definierende Bauteil (1) und/oder der Schaufelfuß mit dem in dem Zwischenraum angeordneten Prüfkopf (6) zerstörungsfrei auf Materialfehler untersucht wird,
wobei der Prüfkopf (6) in einem Zwischenraum angeordnet und insbesondere verfahren wird, welcher durch eine mechanische Nachbearbeitung des die Aufnahmenut (2) definierenden Bauteils (1) und/oder des Schaufelfußes erhalten wurde, insbesondere, indem Materialfehler, die bevorzugt bei einer vorangegangenen zerstörungsfreien Prüfung detektiert wurden, aus dem die Aufnahmenut (2) definierenden Bauteil (1) oder dem Schaufelfuß entfernt, bevorzugt ausgefräst und/oder ausgeschliffen worden sind.

2. Verfahren nach Anspruch 1,
**dadurch gekennzeichnet, dass**
der Prüfkopf (6) in einem Zwischenraum angeordnet und insbesondere verfahren wird, welcher zumindest größtenteils durch eine in dem die Aufnahmenut (2) definierenden Bauteil (1) vorgesehene Ausnehmung (5) gebildet wird.

3. Verfahren nach einem der vorhergehenden Ansprüche,
**dadurch gekennzeichnet, dass**
der Prüfkopf (6) in einem Zwischenraum angeordnet und insbesondere verfahren wird, der sich durch einen in axialer Richtung der Axialströmungsmaschine konstanten Querschnitt auszeichnet.

4. Verfahren nach einem der vorhergehenden Ansprüche,
**dadurch gekennzeichnet, dass**
der Prüfkopf (6) in einem Zwischenraum angeordnet und insbesondere verfahren wird, welcher sich über die gesamte Ausdehnung der Aufnahmenut (2) und/oder des Schaufelfußes in axialer Richtung der Axialströmungsmaschine erstreckt.

5. Verfahren nach einem der vorhergehenden Ansprüche,
**dadurch gekennzeichnet, dass**
der Prüfkopf (6) in einem Zwischenraum angeordnet und insbesondere verfahren wird, welcher im montierten Zustand von außen, insbesondere von einer Stirnseite (3, 4) oder beiden Stirnseiten (3, 4) des die Aufnahmenut (2) definierenden Bauteils (1) und/oder des Schaufelfußes, her zugänglich ist.

6. Verfahren nach einem der vorhergehenden Ansprüche,
**dadurch gekennzeichnet, dass**
der Prüfkopf (6) in einem länglichen Zwischenraum angeordnet und insbesondere in Längsrichtung in diesem verfahren wird, wobei sich der längliche Zwischenraum bevorzugt in axialer Richtung der Axialströmungsmaschine erstreckt.

7. Verfahren nach einem der vorhergehenden Ansprüche,
**dadurch gekennzeichnet, dass**
ein Prüfkopf (6) verwendet wird, dessen Querschnitt an den Querschnitt des Zwischenraumes angepasst ist.

8. Verfahren nach einem der vorhergehenden Ansprüche,
**dadurch gekennzeichnet, dass**
der Prüfkopf (6) in einem Zwischenraum angeordnet und insbesondere verfahren wird, der eine Krümmung aufweist,
wobei die Krümmung insbesondere einer Krümmung der Aufnahmenut (2) entspricht.

9. Verfahren nach einem der vorhergehenden Ansprüche, **dadurch gekennzeichnet, dass**
ein Prüfkopf (6) verwendet wird, der mit einem Führungselement, insbesondere einem Führungsstab (10) verbunden ist.

10. Verfahren nach Anspruch 8 und 9,
**dadurch gekennzeichnet, dass**
ein Prüfkopf (6) verwendet wird, der mit einem Führungselement, insbesondere einem Führungsstab (10) mit einer Krümmung verbunden ist, die insbesondere an die Krümmung des Zwischenraumes angepasst ist.

11. Verfahren nach einem der vorhergehenden Ansprüche,
**dadurch gekennzeichnet, dass**
mehrere Prüfkopfe (6) in dem Zwischenraum angeordnet bzw. in diesem verfahren werden.

12. Verfahren nach Anspruch 10 und 11,
**dadurch gekennzeichnet, dass**
die Prüfköpfe (6) an einem Führungselement, insbesondere Führungsstab (10) angeordnet sind.

13. Verfahren nach einem der vorhergehenden Ansprüche,
**dadurch gekennzeichnet, dass**
der in dem Zwischenraum angeordnete Prüfkopf (6) über einen vorgegebenen Zeitraum, der insbesondere einen Betriebszeitraum der Axialströmungsmaschine einschließt, in dem Zwischenraum verbleibt und insbesondere das die Aufnahmenut (2) definierende Bauteil (1) und/oder der Schaufelfuß mit dem in dem Zwischenraum angeordneten Prüfkopf (6) während des Betriebes der Axialströmungsmaschine zerstörungsfrei auf Materialfehler untersucht wird.

14. Verfahren nach einem der vorhergehenden Ansprüche,
**dadurch gekennzeichnet, dass**
der Prüfkopf in dem Zwischenraum verfahren und ein Weggeber verwendet wird, um den bei bewegtem Prüfkopf erfassten Messwerten eine Ortskoordinate zuordnen zu können.
